# EUROPEAN PATENT APPLICATION

(11) **EP 1 792 719 A2**
(43) Date of publication of application: **06.06.2007**
(21) Application number: 06124733.4
(22) Date of filing: 24.11.2006
(51) Int. Cl.: B29D 30/38, B29C 43/28, B29C 47/02

(54) **Apparatus and method of manufacturing reduced gauge tire ply**

(30) Priority: 30.11.2005 US 290689
(71) Applicant: The Goodyear Tire & Rubber Company, Akron, Ohio 44316-0001 (US)
(72) Inventor: Downing, Daniel Ray, Uniontown, OH 44685 (US)
(74) Representative: Kutsch, Bernd

(57) **Abstract**

A method and apparati are provided for making a ply (10) having a reduced gauge thickness and reduced cord spacing. The reduced gauge, reduced epi ply may be formed using a calendering system (400) or a cross feed extruder system (500). The cords (12) may be flush with the outer rubber surface or may protrude from the outer rubber surface. An optional skim coat of rubber may cover the cords to protect them from being dislodged during manufacturing.

## Description

### Field

This invention relates to pneumatic tires, and more particularly to ply constructions for tires and methods to make plies.

### Background of the Invention

Modern passenger tires are typically constructed utilizing two or more layers of ply or a fabric woven from reinforcement filaments or cords. There has been an increasing trend among tire manufacturers to reduce tire weight without sacrificing structural integrity. One way to decrease weight in the tire is to eliminate ply where it is not needed. Typically, the area under the tread is one area where the ply can be reduced in thickness. Even a small decrease in the amount of materials needed to produce a tire can result in significantly decreased material expenses for a manufacturer engaged in high-volume tire production. There is a need for a tire having reduced weight that provides the desired performance characteristics and can be produced with fewer materials at a lower cost.

### Summary of the Invention

The present invention provides a method of making ply, particularly a reinforced ply for a tire, according to claim 1.

The invention also provides according to claim 2 a layer of ply comprising a layer of gum rubber and a plurality of cords partially embedded within the layer of rubber.

Finally, the invention provides a layer of ply according to claim 8.

Dependent claims cover preferred embodiments of the invention.

The invention will best be understood with reference to the following description of preferred embodiments taken in conjunction with the accompanying drawings.

### Definitions

"Cord" means one of the reinforcement strands, including fibers, which are used to reinforce plies.

"Ply" means a cord-reinforced layer of elastomer-coated, radially deployed or otherwise parallel cords.

"Radial Ply Structure" means the one or more carcass plies or which at least one ply has reinforcing cords oriented at an angle of between 65° and 90° with respect to the equatorial plane of a tire.

"Radial Ply Tire" means a belted or circumferentially-restricted pneumatic tire in which the ply cords which extend from bead to bead are laid at cord angles between 65° and 90° with respect to the equatorial plane of the tire.

### Brief Description of Drawings

In the accompanying drawings:
Figs. 1A and 1B are a partial cross-sectional view of a first embodiment of a ply layer, and a first and second ply layer, respectively;
Figs. 2A and 2B are a partial cross-sectional view of a second embodiment of a ply layer, and a first and second ply layer, respectively.
Figs. 3A, 3B, 3C, 3D and 3E are partial cross-sectional views of a third embodiment of a ply layer;
Fig. 4 is a side view of a calender system for forming ply;
Fig. 5 is a side view of a cross feed extruder system having a die as shown in Fig. 5A for forming ply as shown in Figs. 5B, 5C and 5D.
Fig. 6 is a side view of a second embodiment of a calender system for forming ply;
Fig. 7 is a side view of a second embodiment of a calender system for forming ply;
Figs. 8-10 are front views of alternate dies for use in the calender systems of the inventions.
Fig. 11 is a cross-sectional view of a tire assembly.

### Description of the Preferred Embodiment(s)

Any or all of the ply layers in a tire may comprise one or more layers of a reduced gauge ply having a reduced thickness on the order of 30% to 100 %, preferably 40% to 75%, of the gauge thickness of a standard layer of ply. The ply configurations as described herein may be used in tire configurations such as, for example, passenger tires, truck tires, aircraft tires or off the road tires.

A standard layer of ply is defined herein as having a depth or gauge in the range of 0.03 to 0.06 inches, typically 0.045 inches. A standard layer of ply typically has a cord spacing in the range of 18 to 36 epi, generally 28 epi, and with cord diameters in the range of 0.02 to 0.04 inches. The ply layers in a tire may have different thicknesses. Alternatively, one or more of the ply layers may have a reduced cord spacing on the order of 30% to 100%, preferably 40% to 75%, of the epi spacing of a standard layer of ply. Alternatively, any or all of the ply layers in a tire may comprise a reduced gauge ply having a reduced thickness on the order of 30% to 100 %, preferably 40% to 75%, of the normal gauge thickness and a reduced cord spacing on the order of 30% to 100%, preferably 40% to 75%, of the epi spacing.

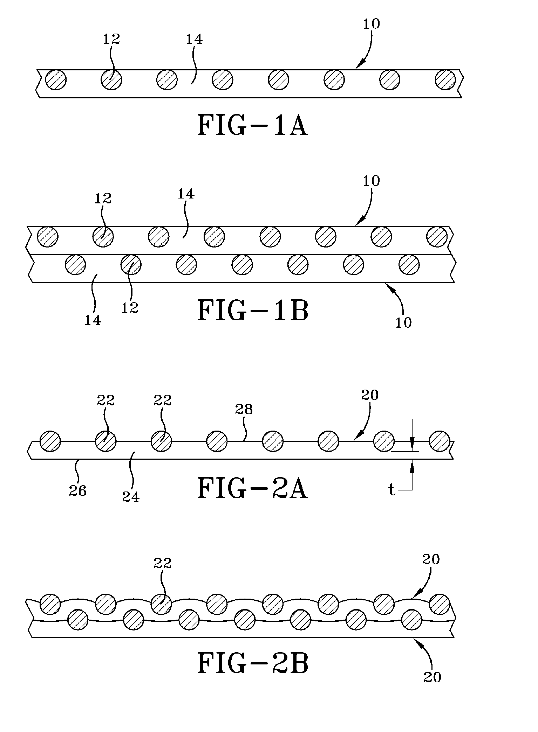

One example of a ply layer construction is shown in Figures 1 a and 1 b. The first layer and second layer of ply 10 may each have a gauge thickness in the range of 30% to 100% of standard ply gauge, and a cord spacing in the range of 30% to 100% the standard cord spacing. In one example, ply layers 10 may each comprise a gauge thickness of 50% standard thickness and a reduced cord spacing of 50% of the standard cord spacing. When layers 10 are combined together, the total thickness of both layers is 100% of the standard thickness and a combined epi cord spacing of 100% of the standard epi. However, ply layers 10 may each have different gauge thickness and cord spacing and when layered together, the combined total thickness may result in a nonstandard thickness and cord spacing.

As shown in Figure 1 B, the cords of ply layers 10 may be oriented at the top edge of the ply so that the cord 12 is flush with the gum layer 14. The cords of the first layer of ply 10 may be offset from the cords of the second layer of ply as shown in Figure 2B. For example, when the two layers of ply are assembled together, they may have the thickness and cord spacing of a typical layer of ply. In one example, the thickness of the ply layers is 0.036 inches and the cord diameters are 0.026 inches in diameter. The cord spacing of each layer is 14 epi. When layered together as in Figure 1 B, the full gauge thickness of the combined layers is 0.072 inches and 28 epi. The cords are staggered.

Alternatively as shown in Figures 2A and 2B, ply layers 20 have the cords 22 impregnated about half way into the gum surface 24 of the ply. The layers 20 may be stacked on top of each other so that the gum or back edge 26 of the first ply layer mates with the upper surface 28 of the second ply layer as shown in Figure 2B. For example, if 0.026 inch diameter cords are used in a 0.023 inch thick gum base, this results in a 0.10 inch thickness "t" between the lower end of the cord to the end of the ply. In one example, the thickness of the ply layers 20 are 0.023 inches and the cord diameters are 0.026 inches in diameter. The cord spacing of each layer is 14 epi. When layered together as in Figure 2B, the full gauge thickness of the combined layers is 0.042 inches and 28 epi. The cords are preferably staggered when the ply layers are assembled together.

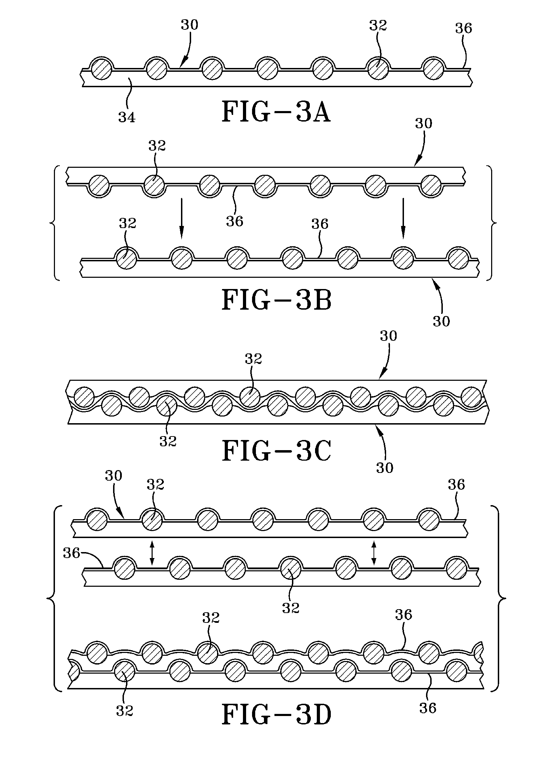

Alternatively as shown in Figures 3A-3D, ply layers 30 have the cords 32 impregnated about half way into the gum surface 34 of the ply, with a skim coat 36 of rubber layered over the cords. The layers 30 may be stacked on top of each other so that the gum or back edge of the first ply layer mates with the upper surface of the second ply layer as shown in Figure 3D. Ply layers 30 may be assembled such that the cords are abutted face to face wherein the cords of the upper layer are located between the cords of the lower layer, as shown in Figure 3B,C. The skim coat 36 forms a protective barrier over the cords 32. The skim coat may comprise a thin layer of gum rubber, having a thickness typically in the range of 0.003 to 0.007 inches. Preferably the cords are encapsulated between the gum rubber and the skim coat layer.

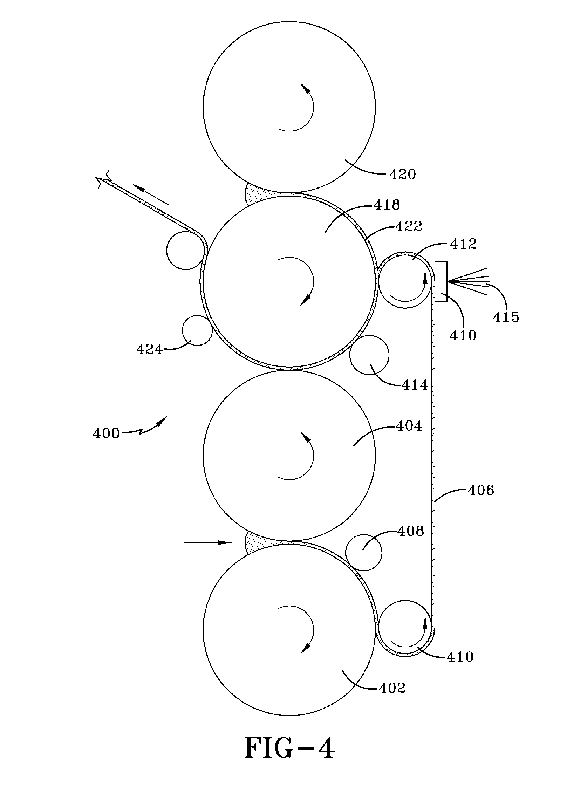

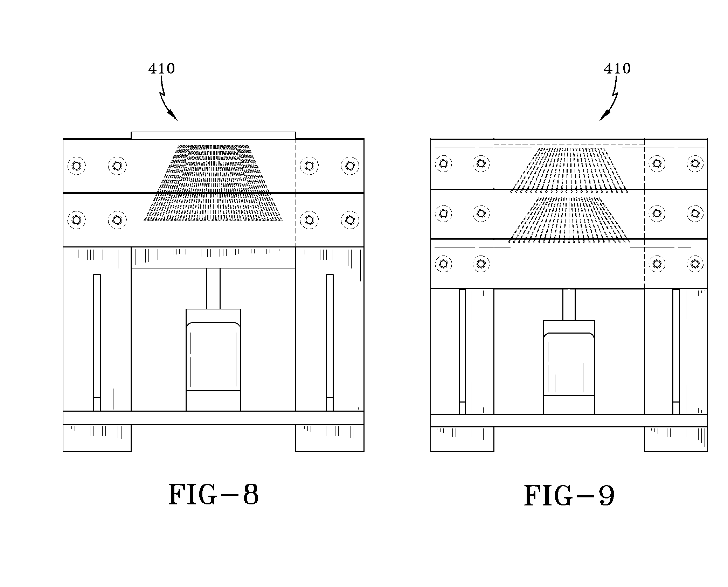

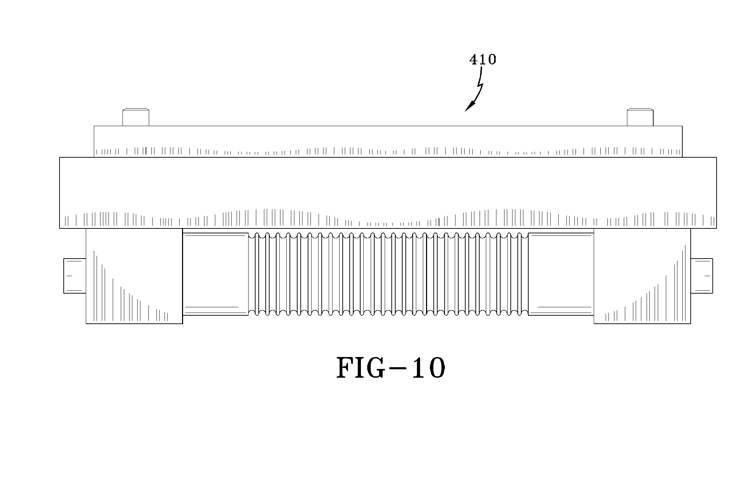

The ply layers as described above may be formed from a calender system 400 as shown in Figure 4. Rubber is fed to the nip of first calender roll 402 and a second calender roll 404 to form the base gum layer 406 of the ply. Trim knife 408 is used to trim off excess rubber to form the desired width of the base gum layer 406. Pull off roller 410 guides the base gum layer 406 and maintains the appropriate tension. The base gum layer 406 is fed to assembly roller 412 having a die 414 located in mating contact with the base gum layer 406. A plurality of cords 415 are fed through the die inlet into engagement with the base gum layer mounted over the assembly roller 412. The die 410 maintains the desired cord spacing. Examples of dies which may be used with the system 400 are shown in Figures 8-10, and are described in more detail in US application no. 11/240,430 filed on September 30, 2005, which is hereby incorporated by reference.

The cords upon exiting the die, are pressed into the top layer of the base ply by the pressure of the die against the assembly roller 412. An optional skim coat of rubber 422 may be applied as a top layer over the cords. Rubber is fed between two rollers 418, 420 having a desired clearance gap to form the desired gauge of the rubber skim coat. The skim coat 422 is applied over the cord/gum layer wherein stitcher roller 414 stitches the skim layer onto the cord/gum layer. Trim knife 424 trims the formed ply to the desired width.

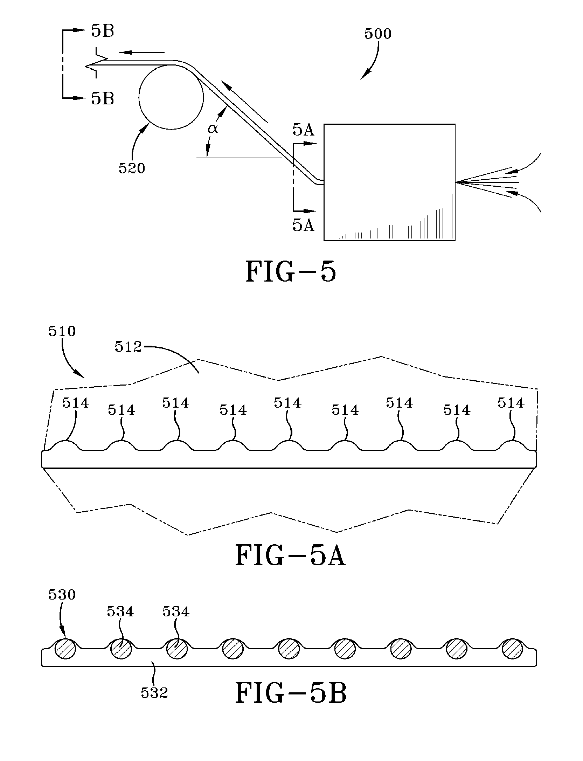

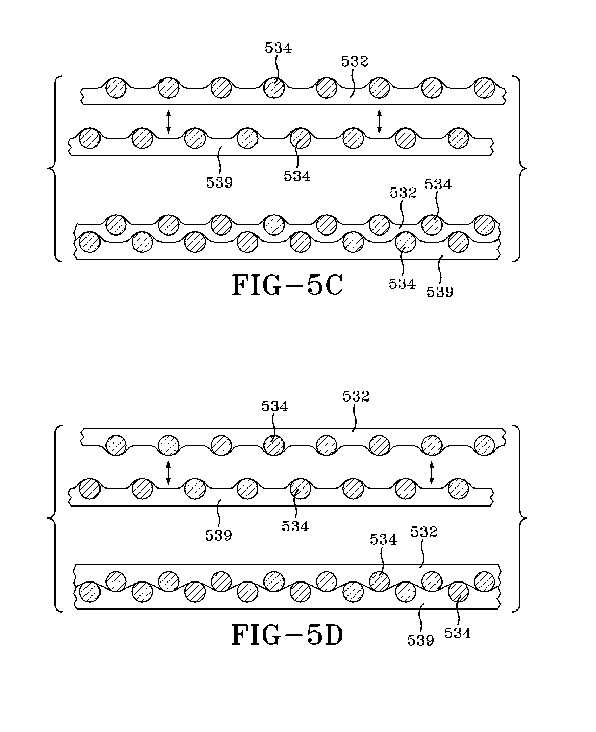

The ply layers shown in Figures 1-3 may also be formed from a cross-feed extruder system 500 shown in Figure 5. As shown in Figure 5a, a cross-feed extruder die 510 may be used having grooves 514 in the upper plate 512 of the die for receiving the cords therein. The grooves are spaced to match the desired cord epi spacing. The cords are pulled through the grooves 514 in the cross feed extruder die by pull-up roller 520. The angle α of the pull up roller 520 is adjustable to pull cords more or less tightly against grooves 514 in die. The higher the angle, the more tightly the cords lie against grooved 514. The angle α may be, for example, in the range of 20-60 degrees. As the cords are pulled through the cross feed extruder, they are coated with rubber. The resulting ply 530 formed by the cross-head extruder has a base gum layer 532 with cords 534 impregnated into the base layer. A thin layer of rubber coats the cords. The ply layers 530 may be assembled top to bottom as shown in Figure 5c or wherein one of the ply layers is flipped over so that the cords are face to face as shown in Fig. 5d.

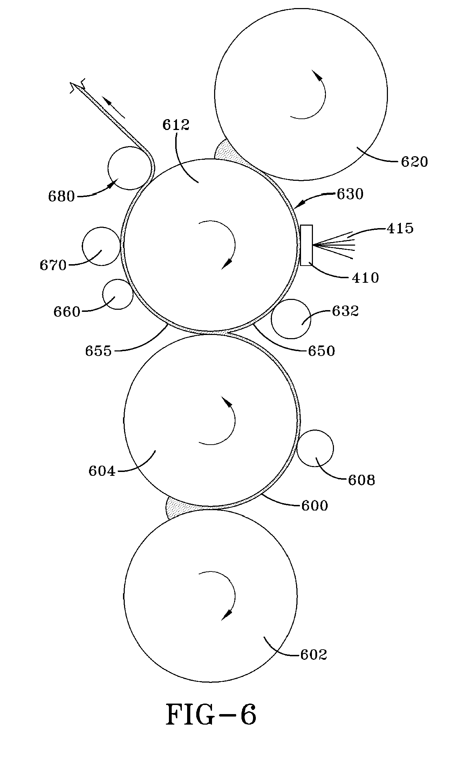

A second embodiment of a calendering system is shown in Figure 6. Rubber is fed to the nip of a first calender roll 602 and second calender roll 604 to form the base gum layer 600 of the ply. Trim knife 608 is used to trim off excess rubber to form the desired width of the base gum layer 600. For example, the base gum layer may be trimmed to a strip of 3.7 inches wide, with a thickness of 0.03 inches.

A bank of rubber is fed into nip of calender rollers 612 and 620, in order to produce a thin skim coat 630 of rubber, which for example, may have a gauge of 0.003 to 0.005 inches. A plurality of cords are pressed into the skim coat 630 via a die 410 as described above, located in mating contact with the skim coat layer 630. The die 410 is mounted adjacent the assembly roller 612 so that the cords are in mating engagement with the skim coat 630. A plurality of cords are fed through the die inlet into engagement with the skim coat gum layer 630 mounted over the assembly roller 612. The die maintains the desired cord spacing. The cords are pressed into the top layer of the base ply by the pressure of the die against the assembly roller 612. The cords may be stitched into the skim coat by cord stitcher roller 632. The base gum layer 600 is fed to the nip of assembly roller 612 for mating engagement with a skim coat cord impregnated layer 650 forming ply layer 655. An optional secondary stitcher 660 may be used to eliminate any remaining trapped air. Trim knife 670 trims the ply layer 655 to the desired width before being pulled off the calender system by rollers 680.

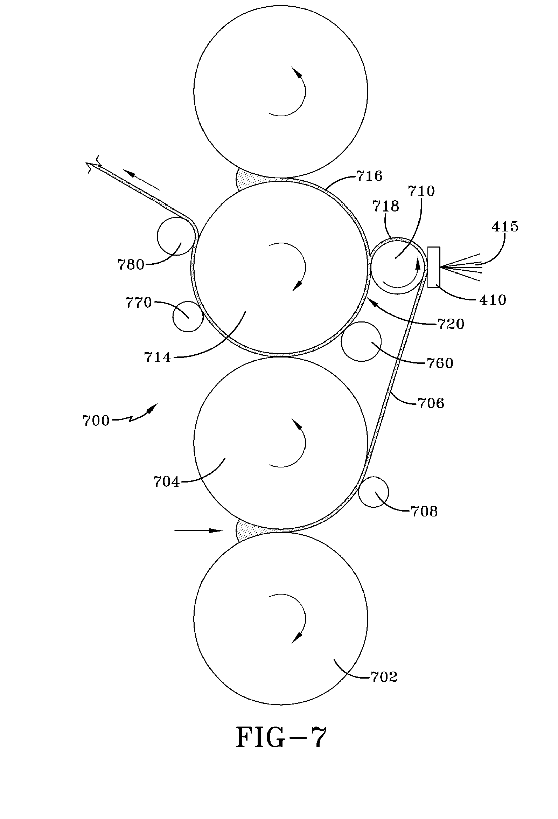

A third embodiment of a calender system 700 is shown in Figure 7. Rubber is fed by an extruder or other means for processing rubber (not shown) to the nip of first calender roll 702 and a second calender roll 704 to form the base gum layer 706 of the ply. Trim knife 708 is used to trim off excess rubber to form the desired width of the base gum layer 706. For example, the base gum layer may be trimmed to a strip of 3.7 inches wide, with a thickness of 0.03 inches. Base gum layer is then fed to assembly roller 710. Cords fed into die 410 are pressed into the base gum layer on assembly roller 710. The cord impregnated base gum layer 702 is fed to the nip of assembly roller 712 and roller 714 for mating engagement with a skim coat layer 716, wherein the assembled components form a ply layer 720. An optional secondary stitcher 760 may be used to eliminate any remaining trapped air. Trim knife 770 trims the ply layer 720 to the desired width before being pulled off the calender system by rollers 780.

### Example 1

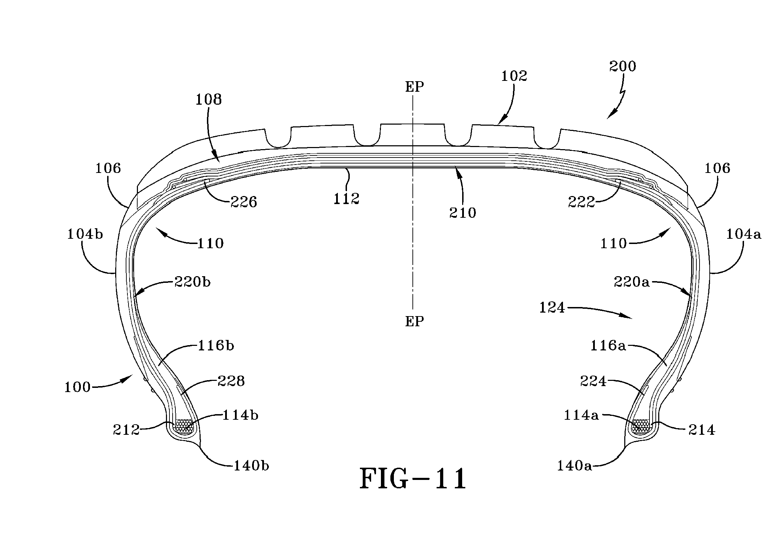

A cross-sectional view of a tire assembly 200 is shown in Figure 11. Ply layer 210 is located radially outward of the inner liner 112, and has a first end 212 located adjacent bead 114b. The ply layer 210 extends up from the first end 212, up the sidewall 104b, under the tread 102, down the other sidewall 104a and extends down to the other bead 114a. The ends 212, 214 of ply layer 210 do not wrap around either bead. A second layer of sidewall ply 220a, 220b is located radially outward of the first layer of ply 210 in the sidewall and shoulder area. A first sidewall ply 220a has a first end 222 located under the inner tread belt 108 and extends down the sidewall 104a, wraps around the bead 114a and apex 116a, and has a turned up end 224 located on the interior of the tire assembly. A second sidewall ply 220b has a first end 226 located under the inner tread belt 108 and extends down the sidewall 104b, wraps around the bead 114b and apex 116b, and has a turned up end 228 located on the interior of the tire assembly. Thus the second layer of ply 220 does not extend under the crown portion of the tire. Each of the ply layers 210, 220 has a reduced thickness of 0.026 inches and a reduced cord spacing of 18 epi. When assembled together, the total gauge thickness is 0.052 inches with a cord spacing of 36 epi. Any of the ply configurations described in the preceding paragraphs would work with the tire configuration.

## Claims

1. A method of making ply, the method comprising the steps of:
calendering a base coat (34) of rubber between a first and second calender rollers (402, 404);
calendering a skim layer (36) of rubber between an assembly roller (412) and a fourth calender roller (418);
pressing a plurality of cords (32) onto the skim layer (36) of rubber forming a cord layer (30);
and mating the base coat (34) of rubber with the cord layer (30) to form a layer of ply.

2. A method of making ply comprising: extruding a plurality of cords through a cross-head extruder, wherein the cords are aligned in a die, and forming a base layer of rubber wherein the cords are impregnated within the base layer.

3. The method of claim 1 or 2, wherein the cords are not flush with the surface of the base layer.

4. A layer of ply comprising a layer of gum rubber and a plurality of cords partially embedded within the layer of rubber.

5. The layer of ply of claim 4, wherein the cord spacing is in the range of 9 to 18 epi or in the range of 18 to 36 epi.

6. The layer of ply of claim 4 or 5, wherein the gauge thickness of the ply is in the range of 0.5 mm to 1.5 mm, alternately in the range from 0.5 mm to 1.14 mm.

7. The layer of ply of at least one of the claims 4-6, wherein the cords are tangent to the upper surface of the rubber layer.

8. A layer of ply comprising a layer of rubber and a plurality of cords, wherein the cord spacing is in the range of 9 to 18 epi, and wherein the gauge thickness of the layer of ply is in the range of 0.5 mm to 1.5 mm.
